# EUROPEAN PATENT SPECIFICATION

(11) **EP 0 440 013 B1**
(45) Date of publication and mention of the grant of the patent: **15.06.1994**
(21) Application number: 91100016.4
(22) Date of filing: 02.01.1991
(51) Int. Cl.: C09J 1/02, C09D 1/02, C04B 28/26, C04B 35/00, B22D 17/20, B29C 33/60

(54) **Water-dispersible, heat-resistant composition and uses thereof**
Wasser-dispergierbare, hitzebeständige Zusammensetzung und ihre Verwendung
Composition résistante à la chaleur, dispersable à l'eau et ses applications

(30) Priority: 10.01.1990 JP 1588/90
(43) Date of publication of application: 07.08.1991
(73) Proprietor: SUGITANIKINZOKUKOGYO CO., LTD., Tokyo (JP)
(72) Inventor: Sugitani, Nobuhiro, Bunkyo-ku, Tokyo, 113 (JP)
(74) Representative: Lesser, Karl-Bolko, Dipl.-Ing.

(56) References cited:
- US-A- 4 721 528
- CHEMICAL ABSTRACTS, vol. 114, no. 24, 17th June 1991, page 315, abstract no. 233786y, Columbus, Ohio, US; & JP-A-2 275 743
- PATENT ABSTRACTS OF JAPAN, vol. 12, no. 263 (C-514)[3110], 22nd July 1988; & JP-A-63 048 358
- DATABASE WPIL, accession no. 83-703271, Derwent Publications Ltd, London, GB; & JP-A-58 091 083
- DATABASE WPIL, accession no. 84-259469, Derwent Publications Ltd, London, GB; & JP-A-59 156 973

## Description

The present invention relates to adhesive and coating compositions which exhibit excellent thermal shock resistance, durability and wear resistance after being cured, the use thereof, and a coating material for a casting mold, comprising an aqueous dispersion containing a heat resistant fiber material therein, as well as a sheet made of the coating composition and the heat resistant fiber.

In recent years, adhesives essentially comprising inorganic ingredients have been studied. For example, Japanese Patent Publication No. 75-033491 discloses a process for producing a highly heat-resistant adhesive composition, comprising calcining a mixture of a particulate high-purity zirconium oxide and colloidal silicic acid as well as sodium aluminate in an amount of 2 to 10 % by weight of the total amount of the zirconium oxide and the silicic acid at 1.000 °C or more and finely pulverizing the calcined material. It was reported that the adhesive produced in this process has a lower curing temperature in a range of 250 to 350 °C.

The present inventor has succeeded in significantly improving the live of a mold by affixing or applying a heat resistant fiber such as potassium titanate (K₂Ti₆O₁₃) fiber, polytitanocarboxylsilane fiber and carbon fiber onto an inner surface of the mold by use of such inorganic adhesive composition (see Japanese Patent Application Nos. 88-313755 and 88-323609). They have also provided a heat resistant sheet using the above-described adhesive composition (see Japanese Patent Application No. 89-013308).

However, the present inventor has understood that the above-described adhesive composition has a problem in its stability after being cured, and the cured coating film is liable to be relatively peeled off. Thereupon, as a result of repeated studies to improve the stability, it has been found that the addition of yttria provides an adhesive film (or coating film) which exhibits a more excellent stability than the adhesive described in Japanese Patent Publication No. 75-033491 and has significant excellent wear resistance, peel-off stability and thermal shock resistance after being dried.

### Disclosure of the invention

The present inventor has found that the above drawback can be solved by providing, as the adhesive and coating compositions, a water-dispersible, heat-resistant composition comprising: a powder mixture consisting of 20 % by weight or more of zirconium oxide, 1 to 10 % by weight of sodium aluminate, yttria in an amount of 2 to 15 % by weight, preferably 4 to 10 % by weight based on the zirconium oxide, and the balance of silica; and sodium silicate containing a small amount of water added thereto.

### Best mode for carrying out the invention

The heat resistant composition of the present invention is prepared by adding sodium silicate containing a small amount of water added thereto to a powder mixture consisting of 20 % or more, preferably 25 to 70 % by weight of zirconium oxide, 1 to 10 %, preferably 2 to 5 % by weight of sodium aluminate, 2 to 15 %, preferably 4 to 10 % by weight of yttria based on the zirconium oxide and the balance of silica, in an amount of 40 to 50 parts by weight (based on 100 parts by weight of the powder mixture). If the yttria content is less than 2 % by weight based on the zirconium oxide, a sufficient stabilizing effect is not achieved. If the yttria content is more than 15 % by weight based on the zirconium oxide, an additional effect cannot be expected and hence, the use of yttria in an excessive amount is uneconomic from the view-point that yttria is expensive. Any content of zirconium oxide less than 20 % by weight will result in an insufficient adhesive force and in an insufficient gradient-providing function between the ceramic layer and a substrate (e. g., a base metal). Optionally, the composition may further contain a heat resistant pigment, e. g., inorganic pigments such as iron oxides, titanium dioxide, which will have no adverse affection during curing or after curing. The composition will exhibit a heat resistance at 1.300 °C after being cured.

In the composition of the present invention, a ruggedness may be produced in a coating film thereof due to sudden evaporation of water and therefore, in order to avoid this, the composition may be air-dried or dried at a temperature of up to 90 °C for 20 minutes to 3 hours. It is convenient that the curing is conducted at 200 to 300 °C for 20 minutes to 3 hours. At a higher temperature, there is an adverse affection due to the remaining water upon the surface of the coating film. At a lower temperature, a satisfactory curing is impossible.

Therefore, the present invention is also directed to a method of use of a heat resistant composition of the type described above, comprising applying the composition onto a substrate, and removing water at a temperature in a range of room temperature to 90 °C after overlapping the substrate on a mating member when the composition is used as an adhesive composition, and effecting a curing reaction at a temperature of 200 to 300 °C.

A coating material for a casting mold, made by dispersing a heat resistant short fiber, e.g. at least one selected from the group consisting of a potassium titanate (K₂Ti₆O₁₃) fiber, a polytitanocarboxylsilane fiber, a carbon fiber and a whisker into an aqueous dispersion resulting from addition of water in a water content of up to 20 % by weight to the above-described composition, applying the resulting dispersion onto an inner surface of the mold and curing the applied coating in a manner described hereinafter exhibits very excellent wear and heat resistances, peel-off stability and durability, as well as a good releasability for a cast product when the mold is used. From the respect of dispersability, it is convenient that the heat resistant fiber used in this case is a short fiber capable of being dispersed in water, e.g. a short fiber having a length of 5 to 200 »m and a diameter of 0,05 to 5 »m.

The coating after being applied onto the inner surface of the mold is cleared of water at a temperature in a range of room temperature to 90 °C and then hardened by a curing reaction at a temperature of 200 to 350 °C.

The base metal of the mold used in the present invention may be any of all usable metals such as copper, copper alloys, steels, aluminum, aluminum alloys, magnesium, magnesium alloys. Surprisingly, the composition of the present invention makes it possible to use even metals having lower melting points and easy to work, as are non-ferrous metals such as, particularly, copper, copper alloys, aluminum, aluminum alloys, magnesium, magnesium alloys.

The potassium titanate of the heat resistant short fibers capable of being used in the present invention is described in "Researches for Systhesis of Potassium Titanate Fiber" in Research Report No. 34, 1982, pages 1 to 37, of the Inorganic Material Research Institute by the Science and Technology Agency. The role of this fiber is to improve the heat and wear resistances and the releasability of the mold. This fiber may be a fine fiber having a length of 5 to 200 »m, preferably 10 to 50 »m and a diameter of 0,05 to 5 »m, preferably 0,1 to 1 »m. It is convenient that the amount of potassium titanate added to the aqueous dispersion of the heat resistant composition of the present invention is of 2 to 30 % by weight.

The present invention also contemplates a sheet made by applying, to a heat resistant fabric to a dry coating thickness of 50 to 400 »m, preferably 200 to 250 »m, a dispersion of a heat resistant short fiber, e.g., at least one selected from the group consisting of a potassium titanate (K₂Ti₆O₁₃) fiber, a polytitanocarboxylsilane fiber, a carbon fiber, a ceramic fiber and another whisker dispersed into an aqueous dispersion resulting from addition of water in a water content of up to 20 % by weight to the coating composition of the present invention, as well as a coating material for a casting mold, which comprises such a sheet affixed to an inner surface of the mold with an adhesive composition of the present invention.

The heat resistant fabric used in the present invention may be one to which the aqueous dispersion of the coating composition of the present invention can be satisfactorily applied. Such fabrics include non-woven, woven and knitted fabrics made of carbon, titano, alumina and silicon carbide fibers. Although the thickness of the fabric is particularly not limited, it is preferred that the thickness of the fabric is relatively thin as small as 10 to 1.000 »m in fields of use where a precision is required.

Further, the present invention is directed to a process for coating a casting mold, comprising the steps of: impregnating a heat resistant fabric of the type described above with a coating composition, if necessary, by adding water in amount of up to 20 % by weight; applying or affixing the resulting fabric to an inner surface of the mold with a heat resistant adhesive of the present invention; removing water at a temperature in a range of room temperature to 90 °C; and effecting a curing reaction at a temperature of 200 to 300 °C, as well as a coating material produced in this manner.

An embodiment of the present invention in which the composition thereof is utilized to a casting mold will be described below.

First, into a composition of the present invention containing water added thereto in a water content of up to 20 % by weight, there is dispersed a short potassium titanate fiber in an amount of 2 to 15 % by weight based on the composition. The resulting dispersion is applied onto a surface of the mold to be coated; dried at a temperature in a range of room temperature to 90 °C for 1 or more hours and then cured at a temperature of 200 to 350 °C. The coated surface of the mold includes those of a spruce, a run off, a feeder head and a body of the mold.

The mold having a coating which is made in this manner and contains a potassium titanate fiber has a satisfactory heat resistance required for casting as well as an excellent wear resistance and a distinguished releasability in withdrawing a molded product from the mold after casting. Further, even if 10.000 shots of molding are conducted without application of a facing material, no abnormality is produced in the surface profile of a molded product and therefore, the mold has an excellent durability sufficiently fit for use.

Further, the present invention is directed to a heat resistant sheet made by applying a coating composition of the present invention onto a heat resistant fabric of the type described above to a dry film thickness of 50 to 400 »m after addition of a small amount of water if required.

Yet further, the present invention is directed to a heat resistant fiber-containing sheet made by pouring an aqueous dispersion containing a composition of the type described above together with at least one of the above-described heat resistant short fibers onto a peelable, water-permeable substrate, e.g., a wire net or the like, removing water at a temperature in a range of room temperature to 90 °C, and peeling off the resulting material. This sheet may be dried when it is to be used.

The thickness of such sheets is particularly not critical, but can be properly determined depending upon the applications. For example, when the sheet is to be affixed or applied to an inner surface of a casting mold, it is convenient that the thickness of the sheet is of about 50 to about 1.000 »m. However, in the case of an application where a dimensional stability is not required, the thickness may be, of course, of a further increased value.

Description will now be made of two preferred embodiments of the present invention in which a composition of the present invention is used in the production of a sheet.

First, into a dispersion of a composition of the present invention containing water added thereto in a water content of up to 20 % by weight, there are dispersed 5 to 15 % by weight of a short potassium titanate fiber and 5 to 15 % by weight of another ceramic fiber, e.g., an alumina fiber based on the composition. The formed dispersion is poured in a proper amount onto a filter paper in a suction filter where most of water is removed by a suction filtration, and the resulting material is dried for 1 to 3 hours at a temperature in a range of room temperature to 90 °C.

The thickness of a dry sheet produced by one run of pouring is up to 500 »m. Further in order to produce a thicker sheet, the above-described pouring and water-removing operations may be repeated and then, a curing reaction may be effected.

The second embodiment involves dispersing a short potassium titanate fiber and another ceramic fiber, e.g., an alumina fiber into water. Then, the formed dispersion is poured in a proper amount onto a filter paper of a suction filter where most of water is removed by a suction filtration to form a sheet-like material. A proper amount of an aqueous dispersion of the composition of the present invention is sprayed onto the sheet-like material. The resulting material is slightly dried at room temperature, followed by respraying of the same aqueous dispersion thereonto and drying for 1 to 3 hours at a temperature in a range of room temperature to 90 °C. These sheets may be cured for about 1 to 3 hours at a temperature of 200 to 350 °C, when they are to be used, for example, to be affixed or applied.

The produced sheet can be properly affixed to a member at a place in which a heat resistance at up to about 1.300 °C is required.

The present invention will be described below in more detail by way of Examples.

### Examples of production of composition

### Example 1

23 g of sodium silicate containing 5 ml of water added thereto is added to 50 g of a powder mixture consisting of 60 parts by weight of zirconium oxide, 40 parts by weight of silica, 5 parts by weight of sodium aluminate and 4,8 parts by weight (corresponding to 8 % by weight based on the zirconium oxide) of yttria, and they are then kneaded to form a viscous paste-like material.

### Example 2

20 g of sodium silicate containing 5 ml of water added thereto is added to 50 g of a powder mixture consisting of 50 parts by weight of zirconium oxide, 55 parts by weight of silica, 5 parts by weight of sodium aluminate and 2 parts by weight (corresponding to 4 % by weight based on the zirconium oxide) of yttria, and they are then kneaded to form a viscous paste-like material.

### Example 3

24 g of sodium silicate containing 4 ml of water added thereto is added to 50 g of a powder mixture consisting of 40 parts by weight of zirconium oxide, 65 parts by weight of silica, 5 parts by weight of sodium aluminate and 2 parts by weight (corresponding to 5 % by weight based on the zirconium oxide) of yttria, and they are then kneaded to form a viscous paste-like material.

### Example 4

22 g of sodium silicate containing 4 ml of water added thereto is added to 50 g of a powder mixture consisting of 30 parts by weight of zirconium oxide, 65 parts by weight of silica, 5 parts by weight of sodium aluminate and 1,5 parts by weight (corresponding to 5 % by weight based on the zirconium oxide) of yttria, and they are then kneaded to form a viscous paste-like material.

### Examples of use of composition

### Example 5

10 g of a potassium titanate fiber having an average length of 20 »m and an average diameter of 0,9 »m is dispersed into an aqueous dispersion of 50 g of the paste-like material described in Example 1 in 5 ml of water. The formed dispersion is applied onto a carbon fiber woven fabric having a thickness of 500 »m to a wet film thickness of 300 »m (dry film thickness: about 215 »m). The resulting material is dried at 90 °C for 1 hour and then cured at a curing temperature of 250 °C for 2 hours.

Then, using 50 g of the composition of Example 1, the above-described cured carbon fiber woven fabric is affixed to an inner surface and a spruce surface of a copper alloy mold for casting a casing for an automobile engine. The affixed fabric is likewise dried at 90 °C for 1 hour and then cured at a curing temperature of 250 °C for 2 hours.

When the mold made in this manner was used for casting a casing for an automobile engine while being cooled to 350 to 400 °C and even if 10.000 shots were conducted, there was still no change on the surface of the mold, and the surface profile of a molded product was good. The releasing was very easy.

### Example 6

Using 50 g of the composition described in Example 2, a carbon fiber woven fabric having a thickness of 500 »m is affixed to an inner surface, a spruce surface and the like of a copper alloy mold for casting a casing for an automobile engine. The affixed fabric is dried at 90 °C for 1 hour and then cured at a curing temperature of 250 °C for 2 hours.

When the mold made in this manner was used for casting a casing for an automobile engine while being cooled to 350 to 400 °C and even if 10.000 shots were conducted, there was still no change on the surface of the mold, and the surface profile of a molded product was good. The releasing was very easy.

### Example 7

6 g of potassium titanate fiber and 4 g of an alumina fiber each having an average length of 20 »m and an average diameter of 0,9 »m are dispersed into an aqueous dispersion of 50 g of the composition described in Example 2 in 4 ml of water.

The resulting dispersion is applied to an inner surface of a steel mold and dried at 90 °C for 1 hour and then cured for 2 hours to provide a coating film having a dry film thickness of about 230 »m.

When the mold made in this manner was used for casting a casing for an automobile engine and even if 10.000 shots were conducted, there was still no change on the surface of the mold, and the surface profile of a molded product was good. The releasing was very easy.

### Production of sheet

### Example 8

6 g of potassium titanate fiber and 4 g of an alumina fiber each having an average length of 20 »m and a diameter of 0,9 »m were dispersed into an aqueous dispersion resulting from addition of 5 ml of water to 50 g of the dispersion of Example 3. A filter paper is laid on Nutsche having an inside diameter of 100 mm. The dispersion of Example 1 is sprayed onto the filter paper, and most of water is removed by a suction filtration to provide a sheet having a wet thickness of about 1 mm. The sheet is withdrawn together with the filter paper and then placed on an unused filter paper and air-dried at room temperature for 1 hour. The obtained sheet has a thickness of about 0,6 mm.

### Example 9

50 g of the dispersion of Example 1 is sprayed onto a woven fabric of a polytitanocarboxylsilane fiber to a wet film thickness of 300 »m and dried at 90 °C for 1 hour to provide a sheet having a coating layer having a dry film thickness of 265 »m.

If the sheet is cured at 300 °C, it has a resistance to a temperature of 1.300 °C.

### Example 10

6 g of a potassium titanate fiber and 4 g of an alumina fiber each having an average length of 20 »m and an average diameter of 0,9 »m are added to a dispersion resulting from addition of 5 ml of water to 50 g of the dispersion of Example 4 and mixed together. The mixture is poured onto a wire net having a very fine mesh and dried at 90 °C for 1 hour.
Thereafter, the resulting coating film is peeled off from the wire net to provide a sheet.

### Examples of use of sheet

### Example 11

The sheet made in Example 8 is affixed or applied to an inner surface, an inner spruce surface and the like of a copper alloy mold for casting a casing for an automobile engine with 50 g of the dispersion described in Example 4 (this mold is a copper alloy of a construction which is described in detail in Japanese Patent Application No. 88-306824 and has three layers: an Ni-plating layer, a Co/Mo/Cr alloy coating layer as an intermediate layer and a porous Al₂O₃/ZrO₃ ceramic coating layer as an outer layer on an inner surface thereof, excepting that the above sheet is herein affixed or applied in place of the ceramic layer). The affixed sheet is dried at 90 °C for 1 hour and then cured at a temperature of 250 °C in a drying chamber.

When the mold made in this manner was used for casting a casing of an automobile engine while being cooled to 350 to 400 °C and even if 10.000 shots were conducted, there was still no change on the surface of the mold, and the surface profile of a molded product was good. The releasing was very easy.

### Industrial applicability

The heat resistant composition of the present invention not only has excellent heat and wear resistances and releasability and further exhibits an excellent durability, but also the hardened film thereof after curing exhibits a more excellent stability than the adhesive described in Japanese Patent Publication No. 75-033491. Accordingly, the heat resistant composition of the present invention significantly contributes to an industry as an adhesive and / or a coating in an industrial field in which the heat and wear resistances and the releasability are required.

## Claims

1. A water-dispersible and heat resistant adhesive composition comprising: a powder mixture consisting of 20 % by weight or more of zirconium oxide, 1 to 10 % by weight of sodium aluminate, 2 to 15 % by weight of yttria based on the zirconium oxide and the balance of silica; and sodium silicate containing a small amount of water added thereto.

2. A water-dispersible and heat resistant coating composition comprising: a powder mixture consisting of 20 % by weight or more of zirconium oxide, 1 to 10 % by weight of sodium aluminate, 2 to 15 % by weight of yttria based on the zirconium oxide and the balance of silica; and sodium silicate containing a small amount of water added thereto.

3. A method of use of an adhesive or coating composition according to claim 1 or 2, comprising applying said composition onto a substrate, and removing water at a temperature in a range of room temperature to 90 °C after overlapping said substrate on a mating member to be bonded when said composition is used as an adhesive composition, and effecting a curing reaction at a temperature of 200 to 350 °C.

4. A coating material for casting mold, made by applying, onto an inner surface of a mold, a dispersion of at least one heat resistant short fiber selected from the group consisting of a potassium titanate (K₂Ti₆O₁₃) fiber, a polytitanocarboxylsilane fiber, a carbon fiber, a ceramic fiber and another whisker dispersed into an aqueous dispersion resulting from addition of water into a coating composition according to claim 2 to a water content of up to 20 % by weight.

5. A sheet having a dry film thickness of 50 to 400 »m, made by applying, onto a heat resistant fabric, a dispersion of at least one heat resistant short fiber selected from the group consisting of a potassium titanate (K₂Ti₆O₁₃) fiber, a polytitanocarboxylsilane fiber, a carbon fiber, a ceramic fiber and another whisker dispersed into an aqueous dispersion resulting from addition of water into a coating composition according to claim 2 to a water content of up to 20 % by weight, and removing water at a temperature in a range of room temperature to 90 °C.

6. A coating material for a casting mold, made by affixing or applying a sheet according to claim 5 to an inner surface of a mold with an adhesive composition according to claim 1 in a method according to claim 3.

7. A process for coating a casting mold, comprising the steps of impregnating a heat resistant fabric with a coating agent composition according to claim 2, affixing the impregnated fabric to a surface of the mold, removing water at a temperature in a range of room temperature to 90 °C, and effecting a curing reaction at a temperature of 200 to 350 °C.

8. A coating material for casting mold, made in a process according to claim 7.

9. A sheet having a dry film thickness of 50 to 400 »m, made by applying a coating composition according to claim 2 to a heat resistant fabric, and removing water at a temperature in a range of room temperature to 90 °C.

10. A process for producing a heat resistant fiber-containing sheet, comprising the steps of pouring, onto a peelable, water-permeable substrate, a dispersion of at least one heat resistant short fiber selected from the group consisting of a potassium titanate (K₂Ti₆O₁₃) fiber, a polytitanocarboxylsilane fiber, a carbon fiber, a ceramic fiber and another whisker dispersed into an aqueous dispersion resulting from addition of water into a coating agent composition according to claim 2 to a water content of up to 20 % by weight, removing water at a temperature in a range of room temperature to 90 °C, and peeling off the resulting sheet from the substrate.

11. A heat resistant fiber-containing sheet produced in a process according to claim 10.

## Patentansprüche

1. Wasserdispergierbare und hitzebeständige Klebstoffzusammensetzung enthaltend: eine Pulvermischung, die aus 20 oder mehr Gewichtsprozent Zirkoniumoxid, 1 bis 10 Gewichtsprozent Natriumaluminat, 2 bis 15 Gewichtsprozent Yttriumoxid auf der Basis des Zirkoniumoxids und der ausgleichenden Menge Siliziumoxid besteht; und Natriumsilikat, das eine kleine ihm beigefügte Menge Wasser enthält.

2. Wasserdispergierbare und hitzebeständige Beschichtungszusammensetzung enthaltend: eine Pulvermischung, die aus 20 oder mehr Gewichtsprozent Zirkoniumoxid, 1 bis 10 Gewichtsprozent Natriumaluminat, 2 bis 15 Gewichtsprozent Yttriumoxid auf der Basis des Zirkoniumoxids und der ausgleichenden Menge Siliziumoxid besteht; und Natriumsilikat, das eine kleine ihm beigefügte Menge Wasser enthält.

3. Verfahren zur Verwendung einer Klebstoff- oder Beschichtungszusammensetzung gemäß Anspruch 1 oder 2, umfassend das Auftragen der Zusammensetzung auf ein Substrat und das Entziehen von Wasser bei einer Temperatur im Bereich zwischen Zimmertemperatur und 90 °C, nachdem das Substrat auf eine Matritze gelegt wurde, um verklebt zu werden, wenn die Zusammensetzung als Klebstoffzusammensetzung verwendet wird, und die Durchführung einer Aushärtungsreaktion bei einer Temperatur von 200 °C bis 350 °C.

4. Beschichtungsmaterial für eine Gießform, das hergestellt wird durch das Aufbringen einer Dispersion aus mindestens einer hitzebeständigen Kurzfaser, die ausgewählt ist aus der Gruppe umfassend eine Kaliumtitanat-Faser (K₂Ti₆O₁₃), eine Polytitan-Carboxylsilan-Faser, eine Kohlenstoff-Faser, eine Keramikfaser und einen anderen Whisker, dispergiert in eine wässerige Lösung, die aus der Zugabe von Wasser zu einer Beschichtungszusammensetzung gemäß Anspruch 2 mit einem Wassergehalt von bis zu 20 Gewichtsprozent resultiert, auf eine innere Oberfläche einer Form.

5. Dünne Lage mit einer Trockenfilmdicke von 50 bis 400 »m, die hergestellt wird durch das Aufbringen einer Dispersion aus mindestens einer hitzebeständigen Kurzfaser, die aus der Gruppe umfassend eine Kaliumtitanat-Faser (K₂Ti₆O₁₃), eine Polytitan-Carboxylsilan-Faser, eine Kohlenstoff-Faser, eine Keramikfaser und einen anderen Whisker ausgewählt ist, dispergiert in eine wässerige Lösung, die resultiert aus der Zugabe von Wasser zu einer Beschichtungszusammensetzung gemäß Anspruch 2 mit einem Wassergehalt von bis zu 20 Gewichtsprozent, auf ein hitzebeständiges Gewebe und den Entzug von Wasser in einem Temperaturbereich zwischen Zimmertemperatur und 90 °C.

6. Beschichtungsmaterial für eine Gießform, hergestellt durch das Aufbringen oder Auftragen einer dünnen Lage gemäß Anspruch 5 auf eine innere Oberfläche einer Form mit einer Klebstoffzusammensetzung gemäß Anspruch 1 nach einem Verfahren gemäß Anspruch 3.

7. Verfahren zum Beschichten einer Gießform, das die Schritte des Imprägnierens eines hitzebeständigen Gewebes mit einer beschichtungsaktiven Zusammensetzung nach Anspruch 2, des Aufbringens des imprägnierten Gewebes auf eine Oberfläche der Form, des Entziehens von Wasser bei einer Temperatur im Bereich zwischen Zimmertemperatur und 90 °C und des Durchführens einer Aushärtungsreaktion bei einer Temperatur zwischen 200 °C und 350 °C unfaßt.

8. Beschichtungsmaterial für eine Gießform, das in einem Verfahren gemäß Anspruch 7 hergestellt wird.

9. Dünne Lage mit einer Trockenfilmdicke von 50 bis 400 »m, die hergestellt wird durch das Auftragen einer Beschichtungszusammensetzung gemäß Anspruch 2 auf ein hitzebeständiges Gewebe und das Entziehen von Wasser bei einer Temperatur im Bereich zwischen Zimmertemperatur und 90 °C.

10. Verfahren zur Herstellung einer hitzebeständige Fasern enthaltenden dünnen Lage, das die Schritte des Gießens auf ein abziehfähiges, wasserdurchlässiges Substrat einer Dispersion aus mindestens einer hitzebeständigen Kurzfaser, die ausgewählt ist aus der Gruppe umfassend eine Kaliumtitanat-Faser (K₂Ti₆O₁₃), eine Polytitan-Carboxylsilan-Faser, eine Kohlenstoff-Faser, eine Keramikfaser und einen anderen Whisker, dispergiert in eine wässerige Lösung, die resultiert aus der Zugabe von Wasser zu einer beschichtungsaktiven Zusammensetzung gemäß Anspruch 2 mit einem Wassergehalt von bis zu 20 Gewichtsprozent, des Entziehens von Wasser bei einer Temperatur im Bereich zwischen Zimmertemperatur und 90 °C und des Abziehens der erhaltenen dünnen Lage vom Substrat umfaßt

11. Hitzebeständige, Fasern enthaltende dünne Lage, die nach einem Verfahren gemäß Anspruch 10 hergestellt wird.

## Revendications

1. Une composition adhésive dispersable dans l'eau et résistante à la chaleur, comprenant: un mélange de poudres composé de 20% en poids ou plus d'oxyde de zirconium, 1 à 10% en poids d'aluminate de sodium, 2 à 15% en poids d'yttria sur base de l'oxyde de zirconium, et, pour le reste, de silice; et de silicate de sodium contenant une faible quantité d'eau y ajoutée.

2. Une composition de revêtement dispersable dans l'eau et résistante à la chaleur, comprenant: un mélange de poudres composé de 20% en poids ou plus d'oxyde de zirconium, 1 à 10% en poids d'aluminate de sodium, 2 à 15% en poids d'yttria sur base de l'oxyde de zirconium, et, pour le reste, de silice; et de silicate de sodium contenant une faible quantité d'eau y ajoutée.

3. Une méthode d'utilisation d'une composition adhésive ou de revêtement selon la revendication 1 ou 2, comprenant l'application de ladite composition sur un substrat et l'élimination de l'eau à une température de l'ordre de la température ambiante à 90°C après recouvrement dudit substrat sur un élément correspondant à unir lorsque ladite composition est utilisée comme composition adhésive, et la réalisation d'une réaction de durcissement à une température de 200 à 350°C.

4. Un matériau de revêtement pour moule de coulée, réalisé en appliquant, sur une surface intérieure du moule, une dispersion d'au moins une fibre courte résistante à la chaleur choisie parmi le groupe composé d'une fibre de titanate de potassium (K₂Ti₆O₁₃), une fibre de polytitanocarboxylsilane, une fibre de carbone, une fibre céramique et un autre poil, dispersée dans une dispersion aqueuse résultant de l'addition d'eau à une composition de revêtement suivant la revendication 2 selon une teneur en eau de jusqu'à 20% en poids.

5. Une feuille ayant une épaisseur de film sec de 50 à 400 »m, réalisée en appliquant, sur un tissu résistant à la chaleur, une dispersion d'au moins une fibre courte résistante à la chaleur choisie parmi le groupe composé d'une fibre de titanate de potassium (K₂Ti₆O₁₃), une fibre de polytitanocarboxylsilane, une fibre de carbone, une fibre céramique et un autre poil, dispersée dans une dispersion aqueuse résultant de l'addition d'eau à une composition de revêtement suivant la revendication 2 selon une teneur en eau de jusqu'à 20% en poids et en éliminant l'eau à une température de l'ordre de la température ambiante à 90°C.

6. Un matériau de revêtement pour un moule de coulée, réalisé en fixant ou appliquant une feuille suivant la revendication 5 sur une surface intérieure d'un moule à l'aide d'une composition adhésive suivant la revendication 1, selon une méthode suivant la revendication 3.

7. Un procédé de revêtement d'un moule de coulée, comprenant les étapes consistant à imprégner un tissu résistant à la chaleur d'une composition d'agent de revêtement suivant la revendication 2, fixer le tissu impregné sur une surface du moule, éliminer l'eau à une température de l'ordre de la température ambiante à 90°C, et effectuer une réaction de durcissement à une température de 200 à 350°C.

8. Un matériau de revêtement pour un moule de coulée, réalisé par un procédé suivant la rvendication 7.

9. Une feuille ayant une épaisseur de film sec de 50 à 400 »m, réalisée en appliquant une composition de revêtement suivant la revendication 2 sur un tissu résistant à la chaleur et en éliminant l'eau à une température de l'ordre de la température ambiante à 90°C.

10. Un procédé de production d'une feuille contenant une fibre résistante à la chaleur, comprenant les étapes consistant à verser, sur un substrat pelable perméable à l'eau, une dispersion d'au moins une fibre courte résistante à la chaleur choisie parmi le groupe composé d'une fibre de titanate de potassium (K₂Ti₆O₁₃), une fibre de polytitanocarboxylsilane, une fibre de carbone, une fibre céramique et un autre poil, dispersée dans une dispersion aqueuse résultant de l'addition d'eau à une composition d'agent de revêtement suivant la revendication 2 selon une teneur en eau de jusqu'à 20% en poids, éliminer l'eau à une température de l'ordre de la température ambiante à 90°C et enlever du substrat la feuille qui en résulte.

11. Une feuille contenant une fibre résistante à la chaleur produite par un procédé suivant la revendication 10.
